# EUROPÄISCHE PATENTSCHRIFT

(11) **EP 0 709 934 B1**
(45) Veröffentlichungstag und Bekanntmachung des Hinweises auf die Patenterteilung: **22.12.1999**
(21) Anmeldenummer: 95115951.6
(22) Anmeldetag: 10.10.1995
(51) Int. Cl.: H01R 25/16, H02G 3/12, H02B 1/052

(54) **Datenübertragungssystem**
Data transfer system
Système de transmission de données

(30) Priorität: 25.10.1994 DE 9417134 U
(43) Veröffentlichungstag der Anmeldung: 01.05.1996
(73) Patentinhaber: SIEMENS AKTIENGESELLSCHAFT, 80333 München (DE)
(72) Erfinder: Fischer, Alfred, D-92422 Schwandorf (DE); Wilhelm, Gerhard, Dipl.-Ing., D-92224 Amberg (DE)

(56) Entgegenhaltungen:
- CH-A- 654 696
- DE-A- 3 732 650
- FR-A- 2 511 197
- FR-A- 2 658 008
- US-A- 3 464 052

## Beschreibung

Die Neuerung bezieht sich auf ein Datenübertragungssystem, das mindestens eine Baugruppe aufweist, die auf einer im Profil hutförmigen Installationsschiene mit einer Ausnehmung aufgeschnappt ist und die über federnde Kontaktelemente mit Strom- bzw. Datenleiterbahnen einer in der Installationsschiene liegenden Daten- bzw. Stromübertragungsschiene elektrisch verbunden sind.

Ein gattungsgemäßes Datenübertragungssystem ist aus der DE-OS 37 32 650 zu entnehmen. Eine Busmehrfachleitung weist hier eine im Querschnitt hutförmige Installationsschiene auf, in der Busleiter nebeneinander isoliert angeordnet sind. Kontaktstifte sind federnd zu einer Leiterplatte z.B. einer Baugruppe und in elektrischem Kontakt zu Leiterbahnen derselben angeordnet. Die Busleiter sind als blanke Bandleiter ausgebildet und elektrisch isoliert auf einer Isolierschicht in der Installationsschiene angeordnet. Die als Kontaktstifte ausgeführten Kontaktelemente sind Schraubfedern, die auf der Kontaktseite der Kontaktstifte einspannen, so daß sie sich mit ihrem freien Ende gegen die Leiterplatte federnd abstützen. Die Isolierschicht mit den Busleitern ist direkt auf dem Boden der U-förmigen Ausnehmung der Installationsschiene aufgeklebt, so daß eine derart ausgeführte Busmehrfachleitung nicht mehr wie sonstige Hutschienen an beliebiger Stelle festgeschraubt werden kann, sondern nur noch an ihren Enden, die außerhalb der Strom- bzw. Datenleiterbahnen liegen.

Der Neuerung liegt die Aufgabe zugrunde, ein Datenübertragungssystem der o.g. Art mit möglichst wirtschaftlicher und fehlersicherer Anbindung der Strom- bzw. Datenleiterbahnen an auch dicht nebeneinander angeordnete Baugruppe zu schaffen, wobei die Befestigung der Installationsschiene auch im Be reich der Strom- bzw. Datenleiterbahnen in üblicher Weise, z.B. durch Verschraubungen und Nietungen, möglich ist und die Anbindung auch trotz Auftreten relativ großer geometrischer Toleranzen bei den an sich genormten Installationsschienen zuverlässig gewährleistet ist.

Die Lösung der geschilderten Aufgabe erfolgt durch ein Datenübertragungssystem nach Anspruch 1. Hierbei ist die Daten- bzw. Stromübertragungsschiene als U-förmiger Träger mit einem stabilen Quersteg und elastischen Seitenflanken und weist derartige Abmessungen auf, daß der Abstand der Seitenflanken, mit denen voran der Träger in der Ausnehmung liegt, ein geringes Übermaß gegenüber dem Abstand der Innenwände der Ausnehmung aufweist und an diesen anliegt. Außerdem ist der Quersteg auf der der Baugruppe zugewandten Seite mit den Strom- bzw. Datenleiterbahnen versehen.

Die Daten- bzw. Stromübertragungsschiene ist lediglich in die hutförmige Installationsschiene eingelegt und bedarf keiner zusätzlichen Haltemittel, da bereits durch Aufschnappen einer Baugruppe auf die Installationsschiene eine ausreichende Befestigung gegeben ist. Durch die elastischen Seitenflanken des Trägers lassen sich mögliche geometrische Toleranzen der als Normprofilschiene ausgebildeten Installationsschiene in ausreichendem Maße erreichen. Dabei soll mit dem Merkmal der Elastizität zugleich eine ausreichende Stabilität gegenüber der Druckbelastung verbunden sein, die sich durch die Kontaktierung ergibt. Die U-Form des Trägers bietet ausreichend Freiraum, beliebig Verschraubungen bzw. Nietungen der Normprofilschiene anbringen zu können.

Vorteilhafte Weiterbildungen der Neuerung sind den Unteransprüchen zu entnehmen. Als besonders vorteilhaft hat sich herausgestellt, den Träger als Formstoff-Extrudierteil auszuführen. Weiterhin ist es vorteilhaft, wenn auf den Quersteg eine mit Strom- bzw. Datenleiterbahnen versehene Leiterplatte aufgebracht ist. Eine andere vorteilhafte Ausführungsform ergibt sich dadurch, daß die Strom- bzw. Datenleiterbahnen mittels Folien-Heißprägetechnik direkt auf dem Quersteg aufgebracht sind.

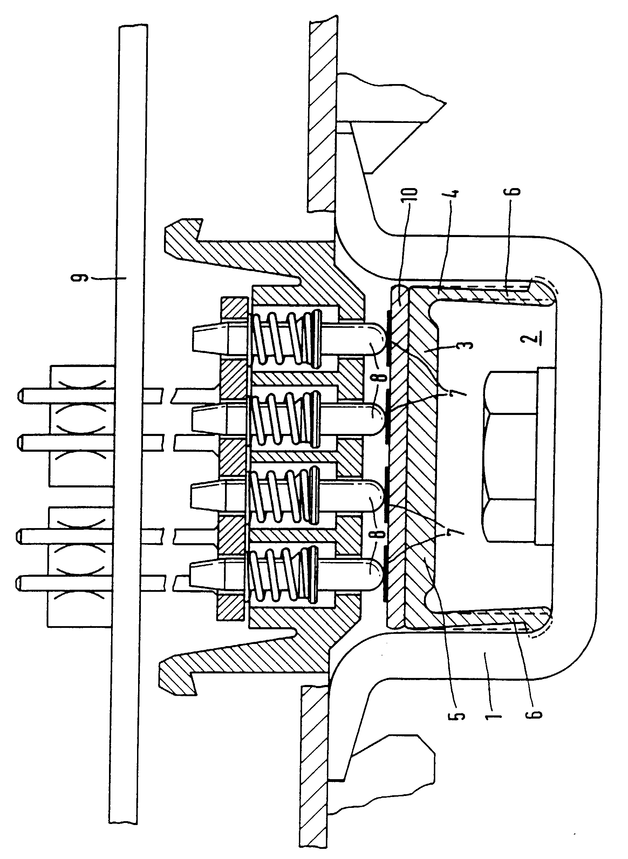

Die Neuerung wird im folgenden anhand von einem in der Zeichnung grob schematisch wiedergegebenen Ausführungsbeispiel näher erläutert.

In der Zeichnung ist eine Hutschiene 1 als Installationsschiene dargestellt, in deren Ausnehmung 2 eine Daten- bzw. Stromübertragungsschiene 3 eingelegt ist. Die Daten- bzw. Stromübertragungsschiene 3 besteht aus einem U-förmigen Träger 4 mit einem stabilen Quersteg 5 und daran in etwa rechtem Winkel abgewinkelten Seitenflanken 6, deren Enden einen gegenüber dem Zwischenraum zwischen den die Ausnehmung 2 bildenden Innenwänden des Trägers 4 größeren Abstand haben. Dieses Übermaß in Verbindung mit der Elastizität gewährleistet, daß die Seitenflanken 6 mit ihren Enden trotz möglicher geometrischer Toleranzen der Hutschiene 1 stets an den Innenwänden derselben anliegen. Die Enden der Seitenflanken 6 liegen zugleich am Boden der Hutschiene 1 auf. Der Quersteg 5 ist auf seiner dem Boden abgewandten Seite, auf der z.B. eine Baugruppe auf die Hutschiene 1 aufgeschnappt ist, mit Strom- bzw. Datenleiterbahnen 7 versehen. Diese sind über federnde Kontaktelemente 8 mit einer Leiterplatte 9 der Baugruppe elektrisch verbunden.

Die U-Form des Trägers 4 bietet ausreichend Freiraum, beliebig Verschraubungen bzw. Nietungen zur Befestigung der Hutschiene 1 anzubringen.

Der Träger 4 ist vorzugsweise als Formstoff-Extrudierteil ausgeführt, das sich einfach und kostengünstig in großen Längen herstellen läßt.

In der Zeichnung ist eine mit üblichen Methoden gefertigte Leiterplatte 10 mit Strom- bzw. Datenleiterbahnen 7 dargestellt, die auf den Quersteg 5 aufgeklebt ist. Demgegenüber ist jedoch auch denkbar, die Strom- bzw. Datenleiterbahnen 7 mittels Folien-Heißprägetechnik in bekannter Weise auf dem Quersteg 5, d.h. den Träger 4 direkt aufzubringen.

## Patentansprüche

1. Datenübertragungssystem, das mindestens eine Baugruppe aufweist, die auf einer im Profil hutförmigen Installationsschiene (1) mit einer Ausnehmung (2) aufgeschnappt ist und die über federnde Kontaktelemente (8) mit Strom- bzw. Datenleiterbahnen (7) einer in der Installationsschiene (1) liegenden Daten- bzw. Stromübertragungsschiene (3) elektrisch verbunden ist, **dadurch gekennzeichnet**, daß die Daten- bzw. Stromübertragungsschiene (3) als U-förmiger Träger (4) mit einem stabilen Quersteg (5) und elastischen Seitenflanken (6) ausgeführt ist und derartige Abmessungen aufweist, daß der Abstand der Seitenflanken (6), mit denen voran der Träger (4) in der Ausnehmung (2) liegt, ein geringes Übermaß gegenüber dem Abstand der Innenwände der Ausnehmung (2) aufweist und an diesen anliegt, und daß der Quersteg (5) auf der der Baugruppe zugewandten Seite mit den Strom- bzw. Datenleiterbahnen (7) versehen ist.

2. Datenübertragungssystem nach Anspruch 1, **dadurch gekennzeichnet**, daß der Träger (4) als Formstoff-Extrudierteil ausgeführt ist.

3. Datenübertragungssystem nach Anspruch 1 oder 2, **dadurch gekennzeichnet**, daß auf den Quersteg (5) eine mit Strom- bzw. Datenleiterbahnen (7) versehene Leiterplatte (10) aufgebracht ist.

4. Datenübertragungssystem nach einem der vorangehenden Ansprüche, **dadurch gekennzeichnet**, daß die Strom- bzw. Datenleiterbahnen (7) mittels Folien-Heißprägetechnik direkt auf dem Quersteg (5) aufgebracht sind.

## Claims

1. Data transfer system which has at least one module which is snapped on to an installation rail (1), which is hat-shaped in section and has a recess (2), and which module is electrically connected by way of resilient contact elements (8) to current and data printed conductors (7) of a data and current transfer rail (3) lying in the installation rail (1), characterized in that the data and current transfer rail (3) is designed as a U-shaped carrier (4) with a stable cross bar (5) and elastic side flanks (6) and has dimensions such that the distance between the side flanks (6), with which the carrier (4) lies forwards in the recess (2), has a small excess compared with the distance between the inner walls of the recess (2) and abuts the latter, and in that the cross bar (5) is provided with the current and data printed conductors (7) on the side facing the module.

2. Data transfer system according to claim 1, characterized in that the carrier (4) is designed as a moulded-material extrusion part.

3. Data transfer system according to claim 1 or 2, characterized in that a printed board (10) provided with current and data printed conductors (7) is applied to the cross bar (5).

4. Data transfer system according to one of the preceding claims, characterized in that the current and data printed conductors (7) are applied directly to the cross bar (5) by means of foil hot stamping technology.

## Revendications

1. Système de transmission de données qui comporte au moins un module qui est verrouillé par ressort sur un rail (1) d'installation électrique, qui a un profil en forme de chapeau et qui comporte un évidement (2), et qui est relié de manière conductrice de l'électricité, par l'intermédiaire d'éléments (8) de contact élastiques, à des pistes (7) de transmission du courant électrique et de données d'un rail (3) de transmission de données et de courant se trouvant dans le rail (1) d'installation électrique, caractérisé en ce que le rail (3) de transmission de données et de courant est réalisé en support (4) en forme de U qui a une âme (5) transversale stable et des flancs (6) latéraux élastiques et qui a des dimensions telles que la distance entre les flancs (6) latéraux par lesquels le support (4) se trouve à l'avance dans l'évidement (2) a une petite surlongueur par rapport à la distance entre les parois intérieures de l'évidement (2) et qu'il s'applique à ces parois intérieures, et en ce que la barrette (5) transversale est munie des pistes (7) de transmission du courant et de données du côté tourné vers le module.

2. Système de transmission de données suivant la revendication 1, caractérisé en ce que le support (4) est réalisé en pièce extrudée de demi-produit moulé.

3. Système de transmission de données suivant la revendication 1 ou 2, caractérisé en ce qu'une plaquette (10) à circuit imprimé munie de pistes (7) de transmission du courant et de données est déposée sur la barrette (5) transversale.

4. Système de transmission de données suivant l'une des revendications précédentes, caractérisé en ce que les pistes (7) de transmission du courant et de données sont déposées directement sur la barrette (5) transversale au moyen d'une technique d'empreinte à chaud.
